Europäisches Patentamt

European Patent Office

Office européen des brevets

(11) Veröffentlichungsnummer: **0 259 576 B1**

# (12) EUROPÄISCHE PATENTSCHRIFT

(45) Veröffentlichungstag der Patentschrift: **09.10.91**

(51) Int. Cl.⁵: **B32B 15/14**, E04B 1/78

(21) Anmeldenummer: **87110391.7**

(22) Anmeldetag: **17.07.87**

(54) **Wärmeisolierende Abdeckung.**

(30) Priorität: **10.09.86 DE 3630852**

(43) Veröffentlichungstag der Anmeldung:
**16.03.88 Patentblatt 88/11**

(45) Bekanntmachung des Hinweises auf die
Patenterteilung:
**09.10.91 Patentblatt 91/41**

(84) Benannte Vertragsstaaten:
**DE ES FR GB IT SE**

(56) Entgegenhaltungen:
**AT-A- 380 293**
**AU-A- 475 800**

(73) Patentinhaber: **ERPE - Ernst Pelz - Vertriebs
GmbH + Co. - Verwaltungs KG
Nr. 60
W-8581 Vorbach Oberpfalz(DE)**

(72) Erfinder: **Pelz, Peter
Dieselweg 10
W-8192 Geretsried 2(DE)**

(74) Vertreter: **Goddar, Heinz J., Dr.
FORRESTER & BOEHMERT Widenmayerstrasse 4/I
W-8000 München 22(DE)**

## Beschreibung

Die Erfindung betrifft eine wärmeisolierende Abdeckung sowie ein Verfahren zu deren Herstellung.

Zum Schutz gegen strahlende Wärme werden im allgemeinen Matten aus anorganischen Fasern, wie z.B. Glas- oder Mineralfasern oder Fasern keramischer Natur, eingesetzt. Entsprechend der Größe der Wärmeabstrahlung werden die abdeckenden Matten in der Dicke variiert, d.h., je größer der Dämmbedarf ist, um so dicker wird die Matte eingesetzt. Dadurch entseht der Nachteil hohen Platzbedarfs und die Labilität der Abdeckung. Dies ist bei der Montage hinderlich und arbeitsaufwenidg.

Aufgabe derr Erfindung ist es daher, eine wärmeisolierende Abdeckung zu schaffen, mit der bei geringerem Platzbedarf und großer Stabilität eine hohe Dämmwirkung erreicht wird.

Erfindungsgemäß wird diese Aufgabe durch eine wärmeisolierende Abdeckung mit den im Kennzeichen von Anspruch 1 aufgeführten Merkmalen gelöst.

Die Erfindung betrifft weiterhin ein Verfahren zum Herstellen einer wärmeisolierenden Abdekkung mit den in Kennzeichen von Anspruch 9 aufgeführten Merkmalen.

Besondere Ausführungsformen der erfindungsgemäßen Abdeckung sowie des erfindungsgemäßen Verfahrens ergeben sich aus den entsprechenden Unteransprüchen.

Die Abdeckung im Sinne der Erfindung, die ein der Aufgabe entsprechend geformter Körper ist, beseitigt die oben genannten Mängel der bekannten wärmeisolierenden Abdeckungen. Bei den besonders bevorzugten Ausführungsformen geht die Erfindung davon aus, daß nicht an allen Punkten einer abzudeckenden Fläche die zu verhindernde Wärmestrahlung gleich groß ist, so daß es möglich ist, die Abdeckungen an weniger beanspruchten Stellen dünner und fester zusammenzupreßen, um beispielsweise Befestigungspunkte zu bekommen, dagegen hochbeanspruchte Stellen voluminöser, d.h. lockerer und dadurch dämmwirksamer zu gestalten. Vor allem bleibt die Abdeckung im Ganzen gesehen von sparsamer Dicke, um auch dort eingesetzt zu werden, wo beschränkte Raumverhältnisse vorherrschen, wie sie z.B. im Maschinen- und Apparatbau vorkommen, beispielsweise, wenn die Wärmestrahlung von Verbrennungsmotoren auf beschränktem Raum eingedämmt werden muß, um z.B. hitzeempfindliche Teile in unmittelbarer Nähe von Auspuffrohren zu schützen.

Die Konstruktion der Abdeckungen im Sinne der Erfindung besitzt folgenden Grundaufbau. Als unterste Schicht hat sie einen Träger, bestehend aus einer mit Kunstharz getränkten hatte aus im wesentlichen organischen Fasern, wie sie beispielsweise aus der DE-OS 29 37 399 bekannt geworden ist. Handelt es sich um die Isolierung gegen Temperaturen bis etwa 200°C wird mindestens die Seite des Trägers, die der Wärmequelle zugewandt ist, mit einer weißglänzenden, ggf. geknitterten Aluminiumfolie bedeckt. Um örtliche Abschirmungen bis etwa 600°C zu erreichen, wird auf den Träger eine voluminöse lockere Isolierwolleschicht mit großer Dämmwirkung an der Steile aufgesetzt, wo die größte Abschirmung gegen strahlende Wärme benötigt wird. Danach werden beide Schichten wieder mit einer weißglänzenden, ggf. geknitterten Aluminiumfolie überzogen.

Das Ganze wird in ein Werkzeug in einer hydraulischen Presse eingetragen, dessen Druckflächen so gestaltet sind, daß an der. Stellen, wo die Dämmwirkung am größten sein muß und daher die Isolierwolleanteile liegen, Vertiefungen eingearbeitet sind, so daß dort kein oder nur geringer Druck auf das Werkstüc ausgeübt wird und die Isolierwolle ihren voluminösen, lockeren Charakter behält.

An anderen Stellen dagegen wird die Abdekkung unter Druck und Wärme in bekannter Weise zu einem festen Körper formgepreßt. Die Anwendung eines besonderen Klebers zum Verbinden der einzelnen Schichten miteinander entfällt, da für diese Aufgabe das Kunstharz zu Verfügung steht, welches zum Aushärten der als Träger dienenden Fasermatte dient. Um die Abschirmung der Strahlungswärme zu erhöhen, kann, wenn die voluminöse Dämmschicht eine ausreichende Dicke besitzt, die Dämmschicht durch eine zweite Aluminiumfolie in zwei Hälften geteilt werden.

Die Vertiefungen im Werkzeug können auch beidseitig, d.h. im Unterwerkzeug und im Oberverkzeug eingearbeitet sein, so daß auf beiden Seiten des Trägers Isolierschichten aufgesetzt werden können.

Weitere Merkmale und Vorteile der Erfindung ergeben sich aus der nachstehenden Beschreibung, in der Ausführungsbeispiele anhand der schematischen Zeichnungen im einzelnen erläutert sind. Dabei zeigt:

Fig. 1 einen Querschnitt durch eine besonders bevorzugte Ausführungsform der Erfindung;

Fig. 2 einen Querschnitt durch eine weitere Ausführungsform der Erfindung; und

Fig. 3 einen Querschnitt durch eine dritte Ausführungsform der Erfindung.

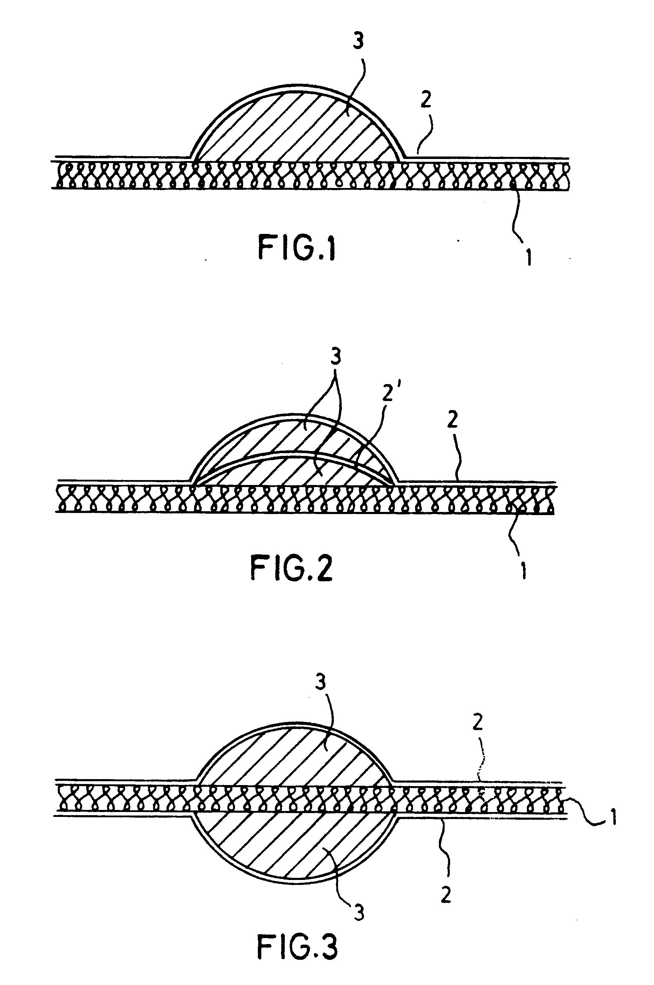

Wie aus Fig. 1 zu ersehen ist, weist die erfindungsgemäße wärmeisolierende Abdeckung im wesentlichen zwei verschiedene Bereiche auf. Für Dämmwirkungen bis etwa 200°C sind die Bereiche vorgesehen, in denen eine Trägermatte 1 auf der der Wärmequelle zugewandten Seite mit einer Aluminiumfolie 2 überzogen ist. Für örtliche Abschirmungen bis etwa 600°c und mehr ist der in Fig. 1 in der Mitte dargestellte Bereich gedacht, bei den zwischen der Trägermatte 1 und der Aluminiumfolie 2 zusätzlich eine Schicht aus voluminöser lockerer Isolierwolle 3 angeordnet ist.

Müssen die örtlichen Abschirmungen auch noch für höhere Temperaturen geeignet sein, kann eine der beiden Ausführungsformen aus Fig. 2 oder Fig. 3 zur Anwendung kommen. Im ersten Fall ist in der Isolierwolleschicht eine weitere Lage Aluminiumfolie 2' angeordnet, im zweiten Fall wurde die Beschichtung der Trägermatte 1 mit Isolierwolle 3 und Aluminiumfolie 2 auf beiden Seiten vorgenommen.

Bei der Herstellung der wärmeisolierenden Abdeckung werden als Grundmaterial für die Trägermatte 1 im wesentlichen organische Fasern, vorzugsweise Acryl- und/oder Polyesterfasern vierwendet. Je nach Höhe der abzuschirmenden Strahlungswärme werden bei besonders hohen Temperaturen Glasfasern in einer Menge von 10 bis 100% der Masse zugemischt. Das zum Aushärten und zum Zusammenkleben der einzelnen Schichten verwendete Kunstharz ist vorzugsweise ein ungesättigtes Polyesterharz, das im Gewichtsverhältnis Trägermatte zu Kunstharz von 1:1,1 angewendet wird.

Danach werden in den vorherbestimmten Bereichen Schichten voluminöser Basalt- oder anderer Dämmwolle 3 auf die mit Kunstharz getränkte Trägermatte 1 gelegt. Die Presswerkzeuge weisen an den entsprechenden Stellen Vertiefungen auf. Das Gewicht der verwendeten Trägermatte liegt vorzugsweise bei 1400 g/m$^2$. Schließlich wird das Ganze mit einer dünnen Aluminiumfolie abgedeckt. Das Ganze wird in die Presswerkzeuge gelegt und in einer hydraulischen Presse Unter Druck und Wärmein bekannter Weise formgepreßt. Die erforderlichen Pressdrücke betragen etwa 10$^9$ Pa und die Presstemperaturen liegen bei etwa 130° bis 145° C. Als Presszeit werden vorzugsweise 2 min angewendet.

Werden höhere örtliche Abschirmungen benötigt, kann entweder in der Isolierwolleschicht 3 eine weitere Lage Aluminiumfolie 2' verlegt werden oder die Beschichtung der Trägermatte 1 aus Isolierwolle 3 und Aluminiumfolie 2 auf beide Seiten aufgetragen werden, wobei im letzteren Fall die Vertiefungen im Presswerkzeug natürlich sowohl im Ober- als auch im Unterwerkzeug eingearbeitet sein müssen.

## Patentansprüche

1. Wärmeisolierende Abdeckung, dadurch gekennzeichnet, daß sie eine mit Kunstharz getränkte Trägermatte (1) aus im wesentlichen organischen Fasern und mindestens auf derjenigen Seite der Trägermatte (1), die der Wärmequelle zugewandt ist, ganzflächig eine Lage aus Aluminiumfolie (2) aufweist, wobei in vorherbestimmten Bereichen zwischen der Trägermatte (1) und der Aluminiumfolie (2) eine Schicht aus Isoliermaterial (3) angeordnet ist.

2. Abdeckung nach Anspruch 1, dadurch gekennzeichnet, daß in den vorherbestimmten Bereichen auf beiden Seiten der Trägermatte (1) eine Schicht aus Isoliermaterial (3) angeordnet ist.

3. Abdeckung nach einem der Ansprüche 1 oder 2, dadurch gekennzeichnet, daß im Isoliermaterial (3) eine weitere in etwa horizontal verlaufende Lage aus Aluminiumfolie (2') angeordnet ist.

4. Abdeckung nach einem der vorangehenden Ansprüche, dadurch gekennzeichnet, daß das Grundmaterial der Trägermatte (1) im wesentlichen aus Acryl- und/oder Polyesterfasern besteht.

5. Abdeckung nach einem der vorangehenden Ansprüche, dadurch gekennzeichnet, daß dem Grundmaterial der Trägermatte ein Anteil an Glasfasern von 10 bis 100 Gew.-% zugemischt ist.

6. Abdeckung nach einem der vorangehenden Ansprüche, dadurch gekennzeichnet, daß das Kunstharz zum Tränken der Trägermatte (1) ein ungesättigtes Polyesterharz ist, das im Gewichtsverhältnis Trägermatte zu Kunstharz von etwa 1:1,1 zugesetzt ist.

7. Abdeckung nach einem der vorangehenden Ansprüche, dadurch gekennzeichnet, daß das Isoliermaterial (3) voluminöse Basalt- oder andere Dämmwolle ist.

8. Abdeckung nach einem der vorangehenden Ansprüche, dadurch gekennzeichnet, daß die Aluminiumfolie (2) geknittert ist.

9. Verfahren zum Herstellen einer wärmeisolierenden Abdeckung, insbesondere zum Herstellen einer Abdeckung nach einem der Ansprüche 1 bis 8, dadurch gekennzeichnet, daß eine mit Kunstharz getränkte Trägermatte aus im wesentlichen organischen Fasern in vorherbestimmten Bereichen mindestens auf einer Seite mit Isoliermaterial belegt wird, daß mindestens die Seite, auf die das Isoliermaterial aufgebracht worden ist, ganzflächig mit einer Lage aus Aluminiumfolie überdeckt wird und daß das Ganze anschließend in einer Preßform, die in den für das Isoliermaterial vorherbestimmten Bereich Vertiefungen aufweist, bei einem Preßdruck von etwa $10^9$ Pa und einer Preßtemperatur zwischen 130 und 145°C formgepreßt wird.

10. Verfahren nach Anspruch 9, dadurch gekennzeichnet, daß als Grundmaterial für die Trägermatte im wesentlichen Acrylund/oder Polyesterfasern verwendet werden.

11. Verfahren nach Anspruch 9 oder 10, dadurch gekennzeichnet, daß dem Grundmaterial für die Trägermatte 10 bis 100 Gew.-% Glasfasern zugemischt werden.

12. Verfahren nach einem der Ansprüche 9 bis 11, dadurch gekennzeichnet, daß es zum Tränken der Trägermatte ein ungesättigtes Polyesterharz im Gewichtsverhältnis Trägermatte zu Kunstharz von etwa 1:1,1 zugesetzt wird.

13. Verfahren nach einem der Ansprüche 9 bis 12, dadurch gekennzeichnet, daß als Isoliermaterial voluminöse Basaltoder andere Dämmwolle verwendet wird.

14. Verfahren nach einem der Ansprüche 9 bis 13, dadurch gekennzeichnet, daß eine geknitterte Aluminiumfolie verwendet wird.

15. Verfahren nach einem der Ansprüche 9 bis 14, dadurch gekennzeichnet, daß vorzugsweise eine Trägermatte mit einem Gewicht von etwa 1400 g/m² verwendet wird.

16. Verfahren nach einem der Ansprüche 9 bis 15, dadurch gekennzeichnet, daß die Preßzeit vorzugsweise etwa zwei Minuten beträgt.

## Claims

1. A thermally insulating cover, characterised in that it comprises a synthetic resin impregnated support mat (1) consisting of substantially organic fibres, and a layer of aluminium foil (2) over the entire surface on at least that side of the support mat (1) which faces the heat source, a layer of insulating material (3) being disposed in predetermined zones between the support mat (1) and the aluminium foil (2).

2. A cover according to claim 1, characterised in that a layer of insulating material (3) is disposed in the predetermined zones on both sides of the support mat (1).

3. A cover according to claim 1 or 2, characterised in that another substantially horizontal layer of aluminium foil (2') is disposed in the insulating material (3).

4. A cover according to any one of the preceding claims, characterised in that the basic material of the support mat (1) consists substantially of acrylic and/or polyester fibres.

5. A cover according to any one of the preceding claims, characterised in that the basic material of the support mat has a proportion of from 10 to 100% by weight of glass fibres mixed therein.

6. A cover according to any one of the preceding claims, characterised in that the synthetic resin for impregnating the support mat (1) is an unsaturated polyester resin, which is added in a support mat to synthetic resin ratio by weight of about 1 : 1. 1.

7. A cover according to any one of the preceding claims, characterised in that the insulating material (3) is voluminous basalt wool or other insulating wool.

8. A cover according to any one of the preceding claims, characterised in that the aluminium foil (2) is creased.

9. A process for the production of a thermally insulating cover, more particularly for making a cover according to any one of claims 1 to 8, characterised in that a synthetic resin impregnated support mat consisting of substantially organic fibres is covered with insulating material in predetermined zones on at least one side, in that at least that side to which the insulating material has been applied is covered over the entire surface with a layer of aluminium foil, and in that the whole is then moulded in a press mould having recesses in the zones predetermined for the insulating material, at a working pressure of about $10^9$ Pa and a pressing temperature of between 130 and 145°C.

10. A process according to claim 9, characterised in that the basic material used for the support mat is substantially acrylic and/or polyester fibres.

11. A process according to claim 9 or 10, characterised in that 10 to 100% by weight of glass fibres are mixed in with the basic material for the support mat.

12. A process according to any one of claims 9 to 11, characterised in that for impregnation of the support mat an unsaturated polyester resin is added in a support mat to synthetic resin ratio by weight of about 1 : 1. 1.

13. A process according to any one of claims 9 to 12, characterised in that the insulating material used is voluminous basalt wool or other insulating wool.

14. A process according to any one of claims 9 to 13, characterised in that a creased aluminium foil is used.

15. A process according to any one of claims 9 to 14, characterised in that use is preferably made of a support mat having a weight of about 1400 g/m².

16. A process according to any one of claims 9 to 15, characterised in that the pressing time is preferably about two minutes.

## Revendications

1. Revêtement isolant de la chaleur, caractérisé en ce qu'il présente une natte de support (1), imbibée de résine synthétique, composée de fibres essentiellement organiques et une couche en feuille d'aluminium (2), bien à plat sur au moins la face de la natte de support (1) qui est tournée vers la source de chaleur, une couche en matériau isolant (3) étant disposée dans des zones prédéterminées, entre la natte de support (1) et la feuille d'aluminium (2).

2. Revêtement selon la revendication 1, caractérisé en ce qu'une couche en matériau isolant (3) est disposée dans les zones prédéterminées, des deux côtés de la natte de support (1).

3. Revêtement selon l'une des revendications 1 ou 2, caractérisé en ce qu'une deuxième couche en feuille d'aluminium (2') s'étendant à peu près horizontalement est disposée dans le matériau isolant (3).

4. Revêtement selon l'une des revendications précédentes, caractérisé en ce que le matériau de base de la natte de support (1) est composé essentiellement de fibres acryliques et/ou de polyester.

5. Revêtement selon l'une des revendications précédentes, caractérisé en ce qu'une certaine proportion de fibres de verre, allant de 10 à 100% en poids, est mélangée au matériau de base de la natte de support.

6. Revêtement selon l'une des revendications précédentes, caractérisé en ce que la résine synthétique servant à imbiber la natte de support (1) est une résine polyester insaturée qui est ajoutée à la résine synthétique suivant une proportion en poids d'à peu près 1:1,1.

7. Revêtement selon l'une des revendications précédentes, caractérisé en ce que le matériau isolant (3) est une laine de basalte à faible densité ou une autre laine isolante.

8. Revêtement selon l'une des revendications précédentes, caractérisé en ce que la feuille d'aluminium (2) est froissée.

9. Procédé de fabrication d'un revêtement isolant de la chaleur, en particulier pour fabriquer un revêtement suivant l'une des revendications 1 à 8, caractérisé en ce qu'une natte de support imbibée de résine synthétique, composée de fibres essentiellement organiques, est recouverte de matériau isolant au moins sur une face dans des zones prédéterminées, qu'au moins la face sur laquelle le matériau isolant a été appliquée est recouverte d'une couche en feuille d'aluminium bien à plat et que l'ensemble est ensuite formé sous pression, à une pression de pressage d'à peu près 10⁹ Pa et une température de pressage située entre 130 et 145° C, dans un moule à pression qui présente des cavités dans la zone prédéterminée pour le matériau isolant.

10. Procédé selon la revendication 9, caractérisé en ce que l'on utilise comme matériau de base pour la natte de support essentiellement des fibres acryliques et/ou de polyester.

11. Procédé selon la revendication 9 ou 10, caractérisé en ce qu'une certaine proportion de fibres de verre, allant de 10 à 100% en poids, est mélangée au matériau de base de la natte de support.

12. Procédé selon l'une des revendications 9 à 11, caractérisé en ce que pour imbiber la natte de support, on ajoute à la résine synthétique une résine polyester insaturée, suivant une proportion en poids d'à peu près 1:1,1.

13. Procédé selon l'une des revendications 9 à 12, caractérisé en ce que le matériau isolant utilisé est une laine de basalte à faible densité ou une autre laine isolante.

14. Procédé selon l'une des revendications 9 à 13, caractérisé en ce que l'on utilise une feuille d'aluminium froissée.

15. Procédé selon l'une des revendications 9 à 14, caractérisé en ce que l'on utilise de préférence une natte de support d'un poids d'à peu prés 1400 g/cm². 

16. Procédé selon l'une des revendications 9 à 15, caractérisé en ce que le temps de pressage est de préférence d'à peu près deux minutes.

FIG.1

FIG.2

FIG.3